(19) **Europäisches Patentamt**

**European Patent Office**

**Office européen des brevets**

(11) Veröffentlichungsnummer: **0 273 177 B1**

## (12) EUROPÄISCHE PATENTSCHRIFT

(45) Veröffentlichungstag der Patentschrift: **02.01.92**

(51) Int. Cl.⁵: **B60K 41/06**

(21) Anmeldenummer: **87117039.5**

(22) Anmeldetag: **19.11.87**

(54) **Verfahren zum Vermeiden von Getrieberasselgeräuschen bei Wechselgetrieben, insbesondere von Kraftfahrzeugen.**

(30) Priorität: **22.12.86 DE 3643943**

(43) Veröffentlichungstag der Anmeldung:
**06.07.88 Patentblatt 88/27**

(45) Bekanntmachung des Hinweises auf die Patenterteilung:
**02.01.92 Patentblatt 92/01**

(84) Benannte Vertragsstaaten:
**DE FR GB IT SE**

(56) Entgegenhaltungen:
**DE-A- 3 415 092**
**FR-A- 2 473 116**
**GB-A- 2 151 048**
**US-A- 4 606 005**

**PATENT ABSTRACTS OF JAPAN, Band 7, Nr. 163 (M-229)[1308], 17. Juli 1983; & JP-A-58 68 541 (TOKYO KOGYO K.K.) 23-04-1983**

(73) Patentinhaber: **FORD-WERKE AKTIENGESELL-SCHAFT**
**Werk Köln-Niehl Henry-Ford-Strasse Postfach 60 40 02**
**W-5000 Köln 60(DE)**
(84) Benannte Vertragsstaaten:

**DE IT SE**

Patentinhaber: **FORD FRANCE SOCIETE ANO-NYME**
**344 Avenue Napoléon Bonaparte B.P. 307**
**F-92506 Rueil Malmaison Cedex(FR)**
(84) Benannte Vertragsstaaten:
**FR**

Patentinhaber: **FORD MOTOR COMPANY LI-MITED**
**Eagle Way**
**Brentwood Essex CM13 3BW(GB)**
(84) Benannte Vertragsstaaten:
**GB**

(72) Erfinder: **Abromeit, Gerhard**
**En de Fludänne 4**
**W-5000 Köln 80(DE)**

(74) Vertreter: **Ritzkowsky, Harald, Dipl.-Ing.**
**Ford-Werke Aktiengesellschaft Patentabteilung NH/DRP Henry-Ford-Strasse**
**W-5000 Köln 60(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung bezieht sich auf ein Verfahren zum Vermeiden von Getrieberasselgeräuschen bei Wechselgetrieben, insbesondere von Kraftfahrzeugen der im Oberbegriff des Patentanspruches 1 erläuterten Art.

Aus der EP-B1 00 11 088 ist ein Verfahren zum Beeinflussen einer Brennkraftmaschine eines Kraftfahrzeugantriebes beim Gangwechsel eines Stufengetriebes bekannt, bei dem die elektronische Steuerung der Zündung und der Kraftstoffzumessung eines Verbrennungsmotors ereignisbedingt zeitweise dahingehend veränderbar ist, daß ein Schaltruck beim Gangwechsel nicht störend in Erscheinung tritt.

Bei heutigen, modernen Wechselgetrieben für Kraftfahrzeuge, bei denen durch aufwendige Lagerungsmaßnahmen ein günstiger Wirkungsgrad des Wechselgetriebes erzielt wird, hat es sich gezeigt, daß diese in Verbindung mit den bei einem Verbrennungsmotor, der mittels einer elektronischen Steuerung der Zündung und der Kraftstoffzumessung zu einem möglichst mageren Verbrennungsablauf gesteuert wird um ein günstiges Abgas- und Verbrauchsverhalten zu erzielen, auftretenden Ungleichförmigkeiten im Drehschwingungsverhalten des Verbrennungsmotors, insbesondere bei in Leerlaufstellung befindlichen Wechselgetriebe, aber auch bei leichter Belastung bei eingelegten Gängen zu unerwünschten Getrieberasselgeräuschen führen.

Aus der JP-A-58/68 541 ist ein Verfahren zum Vermeiden von Getrieberasselgeräuschen bei Wechselgetrieben, insbesondere von Kraftfahrzeugen bekannt, bei dem bei einem Motor/Getriebeaggregat bei Motorleerlauf, eingerückter Kupplung und auf Neutral geschaltetem Wechselgetriebe durch einen Vibrationssensor das Auftreten von Getrieberasselgeräuschen erfaßt wird und danach die Leerlaufdrehzahl des Motors durch Öffnen der Drosselklappe auf einen Wert erhöht wird, bei dem das Getrieberasseln nicht mehr auftritt.

Bei dem bekannten Verfahren wird somit lediglich die Leerlaufdrehzahl des Verbrennungsmotors erhöht, wodurch das Abgas- und Verbrauchsverhalten des Verbrennungsmotors im Leerlauf auf unerwünschte Weise verschlechtert wird.

Die Aufgabe der Erfindung ist es, ein Verfahren zum Vermeiden von Getrieberasselgeräuschen bei Wechselgetrieben, insbesondere von Kraftfahrzeugen, der im Oberbegriff des Patentanspruches erläuterten Art derart zu verbessern, daß mit einem minimalen Bauaufwand nur in Form der Bereitstellung von bestimmten Steuersignalen auf eine bereits im Kraftfahrzeug vorhandene elektronische Steuerung der Zündung und der Kraftstoffzumessung des Verbrennungsmotors zugegriffen und so direkt auf die das Getrieberasselgeräusch verursachenden Parameter des Verbrennungsprozesses des Motors Einfluß genommen wird.

Gemäß der Erfindung wird diese Aufgabe gelöst, indem bei einem Verfahren zum Vermeiden von Getrieberasselgeräuschen bei Wechselgetrieben, insbesondere von Kraftfahrzeugen, gemäß dem Oberbegriff des Patentanspruches die im Kennzeichenteil des Patentanspruches 1 aufgezeigten Maßnahmen angewendet werden.

Dadurch, daß das Getrieberasselgeräusch-Signal der elektronischen Steuerung für die Zündung und die Kraftstoffzumessung des Verbrennungsmotors zugeleitet wird und innerhalb der für die Motorsteuerung vorhandenen Kennfeld-Steuerung von einem Bereich für Normalbetrieb auf einen Bereich umgeschaltet wird, der den Verbrennungsmotor so steuert, daß keine Ungleichförmigkeiten im Drehschwingungsverhalten auftreten und daher Getrieberasselgeräusche vermieden werden, wird ein unerwünschtes Erhöhen der Leerlaufdrehzahl und eine damit verbundene Erhöhung des Leerlaufverbrauches vermieden.

Die erforderlichen Steuersignale werden hierbei von einem am Wechselgetriebe angeordneten Gangwahl-Schalter und einem Getrieberasselgeräusch-Sensor (nach Art eines Klopfsensors) geliefert und bewirken in Abhängigkeit vom Auftreten des Getrieberasselgeräusches ein Umschalten der Steuerung der Zündung und der Kraftstoffzumessung des Verbrennungsmotors von einer Kennfeld-Steuerung für Normalbetrieb zu einer Kennfeldsteuerung für den Fall von Getrieberasselgeräuschen.

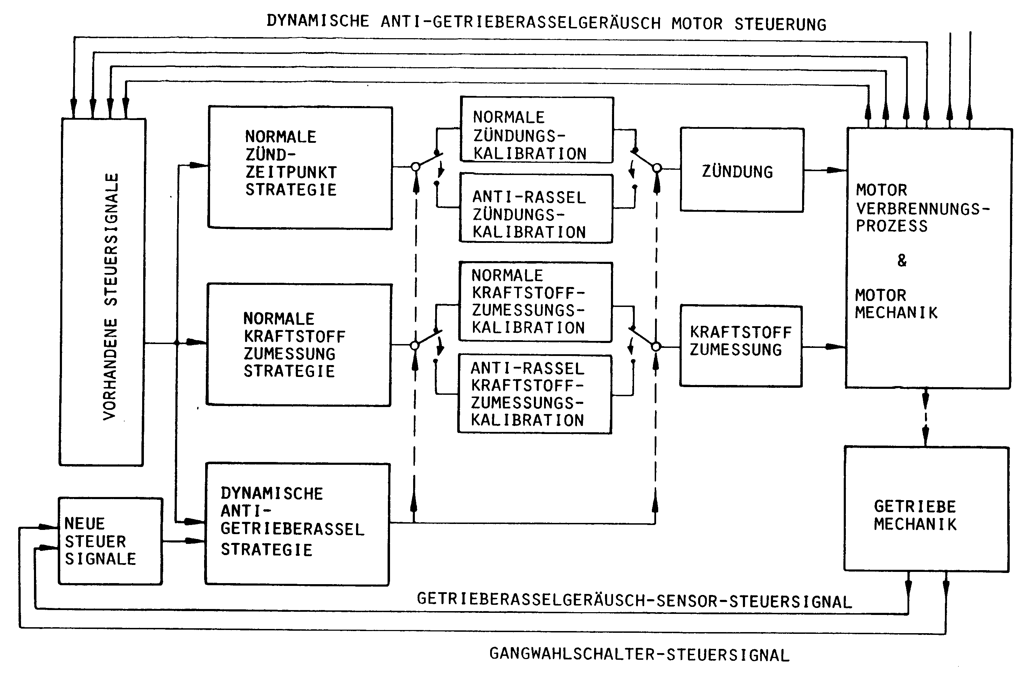

Die Erfindung wird anhand eines in der beiliegenden Zeichnung gezeigten Schaltungsschemas erläutert. Es zeigt:

Die Figur ein Steuerungsschema des Verfahrens zum Vermeiden von Getrieberasselgeräuschen bei Wechselgetrieben, insbesondere von Kraftfahrzeugen.

Das Schaltungsschema ist infolge seiner schriftlichen Erläuterung für den Steuerungsfachmann ohne besondere Erläuterung verständlich.

Es soll hier nur darauf hingewiesen werden, daß unter den Begriff - vorhandene Steuersignale - die für eine herkömmliche elektronische Steuerung eines Verbrennungsmotors üblichen Steuersignale wie Motordrehzahl, Drosselklappenstellung, Motortemperatur, Fahrzeuggeschwindigkeit und dergleichen verstanden werden und daß unter den Begriff - neue Steuersignale - zum Beispiel ein Gangwahl-Schalter-Steuersignal und ein Getrieberasselgeräusch-Steuersignal verstanden werden.

Mit dem Gangwahl-Schalter wird vorzugsweise die Leerlaufaufstellung oder Neutralstellung oder

aber auch der jeweilig gewählte Gang des Wechselgetriebes erfaßt.

Das Getrieberasselgeräusch-Steuersignal kann von einem am Getriebegehäuse aufgenommenen Erschütterungs- oder Vibrations-Sensor der Bauart erzeugt werden, wie sie zum Beispiel bereits zum Erfassen eines klopfenden Verbrennungsablaufes bei Verbrennungsmotoren in verschiedenen Ausführungen bekannt ist. Die beiden neuen Steuersignale, daß Gangwahl-Steuersignal und das Getrieberasselgeräusch-Steuersignal werden einer dynamischen Anti-Getrieberasselgeräusch-Steuerung zugeführt, die aufgrund der empfangenen Signale feststellt, ob Getrieberasselgeräusche in der Weise auftreten, daß eine entsprechende Gegensteuerung erfolgen muß. Ist dies der Fall, so wird von einer Kennfeld-Steuerung für den Normalbetrieb auf eine für den Fall von Getrieberasselgeräuschen ausgelegte Kennfeld-Steuerung umgeschaltet, wodurch z.B. die Zündung und die Kraftstoffzumessung zum Verbrennungsmotor in der Weise erfolgt, daß z.B. der Zündzeitpunkt und die Kraftstoffzumessung verändert wird, damit eine optimalere Zündung und ein besser angepaßtes Kraftstoff-Luft-Gemisch erreicht wird, wodurch die durch einen mageren Verbrennungsablauf besonders stark ausgeprägten Ungleichförmigkeiten im Drehschwingungsverhalten des Verbrennungsmotors vermieden werden.

Die dynamische Anti-Getrieberasselgeräusch-Steuerung kann in Form eines "Closed Loop System" ausgeführt werden, das in Verbindung mit einer Auslegung als "Self Learning System" auch Auswirkungen aufgrund von Produktionstoleranzen oder von Reparturen und Abweichungen im Betrieb des Verbrennungsmotors und des Getriebes über die Gesamtlebensdauer des Fahrzeuges hin kompensieren kann.

Die beschriebene erfindungsgemäße Steuerung kann mit der heute zur Verfügung stehenden Hardware im Mikroprozessorbereich und der heute möglichen Software-Entwicklung ohne weiteres realisiert werden.

**Patentansprüche**

1. Verfahren zum Vermeiden von Getrieberasselgeräuschen bei wechselgetrieben, insbesondere von Kraftfahrzeugen, bei dem bei Motorleerlauf und eingerückter Kupplung und einem Gangwahlschalter und einem Getrieberasselgeräusch-Sensor am Wechselgetriebe bei auf Neutral geschaltetem Getriebe und einem dann auftretendem Getrieberasselgeräusch-Signal eine Drehzahlbeeinflussung eines Verbrennungsmotors erfolgt, **dadurch gekennzeichnet,** daß
   - das Getriegerasselgeräusch-Signal der elektronischen Steuerung für die Zündung und die Kraftstoffzumessung des Verbrennungsmotors zugeleitet wird und innerhalb der für die Motorsteuerung vorhandenen Kennfeld-Steuerung von einem Bereich für Normalbetrieb auf einen Bereich umgeschaltet wird, der den Verbrennungsmotor so steuert, daß keine Ungleichförmigkeiten im Drehschwingungsverhalten auftreten und daher Getrieberasselgeräusche vermieden werden.

**Claims**

1. A method of preventing vibration noise in change-speed gearboxes, in particular of motor vehicles, in which the control of the rotational speed of an internal combustion engine takes place during engine idling and with the clutch engaged and a gear selector and a gearbox vibration noise sensor on the change-speed gearbox with the gearbox set to neutral and a gearbox vibration noise signal then occurring, characterized in that the gearbox vibration noise signal is supplied to the electronic control for the ignition and the fuel measuring control of the internal combustion engine and within the performance-characteristic control present for controlling the engine can be changed over from a range for normal operation to a range which controls the internal combustion engine in such a way that no irregularities occur in the rotational vibration behaviour and gearbox vibration noises are therefore avoided.

**Revendications**

1. Procédé pour éviter les cliquetis d'engrenages dans les boîtes de vitesses, en particulier de véhicules à moteur, dans lequel, le moteur tournant à vide et l'embrayage étant embrayé, et en présence d'un commutateur de sélection des vitesses et d'un capteur de cliquetis d'engrenages sur la boîte de vitesses, on agit sur le nombre de tours d'un moteur à combustion interne lorsque la boîte est au point mort et qu'un signal de cliquetis d'engrenages apparaît alors, caractérisé par le fait que le signal de cliquetis d'engrenages est amené à la commande électronique qui est destinée à l'allumage et au dosage du carburant du moteur à combustion interne, et qu'à l'intérieur de la commande par réseaux de caractéristiques qui est présente pour la commande du moteur, on passe d'une zone destinée au fonctionnement normal à une zone qui commande le moteur à combustion interne de telle manière qu'aucune irrégularité n'apparaisse dans le comportement des oscillations rotatives et que les cliquetis d'engrenages soient ainsi évités.

DYNAMISCHE ANTI-GETRIEBERASSELGERÄUSCH MOTOR STEUERUNG

VORHANDENE STEUERSIGNALE

NORMALE
ZÜND-
ZEITPUNKT
STRATEGIE

NORMALE
KRAFTSTOFF
ZUMESSUNG
STRATEGIE

DYNAMISCHE
ANTI-
GETRIEBERASSEL
STRATEGIE

NEUE
STEUER
SIGNALE

NORMALE
ZÜNDUNGS-
KALIBRATION

ANTI-RASSEL
ZÜNDUNGS-
KALIBRATION

NORMALE
KRAFTSTOFF-
ZUMESSUNGS-
KALIBRATION

ANTI-RASSEL
KRAFTSTOFF-
ZUMESSUNGS-
KALIBRATION

ZÜNDUNG

KRAFTSTOFF
ZUMESSUNG

MOTOR
VERBRENNUNGS-
PROZESS

&

MOTOR
MECHANIK

GETRIEBE
MECHANIK

GETRIEBERASSELGERÄUSCH-SENSOR-STEUERSIGNAL

GANGWAHLSCHALTER-STEUERSIGNAL

EP 0 273 177 B1